# EUROPEAN PATENT APPLICATION

(11) **EP 4 498 079 A1**
(43) Date of publication of application: **29.01.2025**
(21) Application number: 23188501.3
(22) Date of filing: 28.07.2023
(51) Int. Cl.: G01N 30/74, G01N 30/86, G01N 30/88, B01D 15/18

(54) **METHOD OF CONTROLLING A BIOPHARMACEUTICAL PURIFICATION PROCESS**

(71) Applicant: Sartorius Stedim Biotech GmbH, 37079 Göttingen (DE)
(72) Inventor: KRUSE, Thomas, 37079 Goettingen (DE); AUSTERJOST, Jonas, 37079 Goettingen (DE); HOEHSE, Marek, 37079 Goettingen (DE); SANTOS DE MATOS FORTUNA, Ana Raquel, 37079 Goettingen (DE); GRIMM, Christian, 37079 Goettingen (DE); SUROWIEC, Izabella, 37079 Goettingen (DE)
(74) Representative: Prinz & Partner mbB

(57) **Abstract**

A method of controlling a biopharmaceutical purification process, preferably a continuous process, making use of a separation arrangement. The separation arrangement preferably includes multiple chromatography columns or filtration devices. The method comprises the following steps: repeatedly acquiring an absorption spectrum inline or online at a fluid stream with a detector which is capable of recording spectra within a wavelength range between 190 nm and 2400 nm, preferably between 190 nm and 390 nm or 190 nm and 780 nm or 1100 nm and 2400 nm; real-time processing of the acquired spectrum; and real-time monitoring and controlling the process based on the processed spectrum. The step of processing includes at least one of the following measures: reducing noise; reducing spectral interference; correcting the acquired spectrum for scattering effects and/or other background effects.

## Description

The invention relates to a method of controlling a biopharmaceutical purification process, preferably a continuous process, making use of a separation arrangement.

Continuous manufacturing of biopharmaceutical products like monoclonal antibodies (mAb) offers several benefits like eliminating or minimizing interstage product hold containers and significant time savings due to parallel operation of different unit operations. Continuous chromatography techniques allow optimized productivity and buffer savings compared to standard batch bind-and-elute processes.

However, continuous chromatography processes still rely on time/volume dependent predefined recipes. The amount of feed solution applied to a chromatography column during the loading phase is calculated based on the known product concentration in the feed solution and the column binding capacity. However, due to variations in the product feed concentration (e. g. throughout a continuous perfusion cultivation, or caused by different media components or feeding strategies in the upstream process, etc.) and deviations in capacity between different columns as well as fouling effects throughout the lifetime of a column, predefined recipes often result in loss of product, low yields or suboptimal utilization of the column binding capacity. In other words: Since they are, at least partially, based on assumptions and not changed during a running process, predefined recipes are commonly designed conservatively to be robust enough to compensate for unforeseeable variations. This lack of dynamic adjustment or adaptation often prevents full exploitation of a process.

US 2012/091063 A1 shows a setup of a chromatography system for determining binding capacities of a chromatographic column. Two detectors, one upstream of the column and another one downstream of the column, detect a feed signal representative of the composition of a feed material provided to the inlet of the column and an effluent signal representative of the composition of the effluent from the column, respectively. A deltasignal (feed signal minus effluent signal) is calculated to determine binding capacities of the column.

It is an object of the invention to overcome the limitations of current setups and predefined recipes in biopharmaceutical purification processes.

The invention provides a method of controlling a biopharmaceutical purification process, preferably a continuous process, making use of a separation arrangement. The separation arrangement preferably includes multiple chromatography columns or filtration devices. The method comprises the following steps: repeatedly acquiring an absorption spectrum inline or online at a fluid stream with a (single) detector which is capable of recording spectra within a wavelength range between 190 nm and 2400 nm, preferably between 190 nm and 390 nm (UV) or 190 nm and 780 nm (UV-Vis) or 1100 nm and 2400 nm (NIR); real-time processing of the acquired spectrum; and real-time monitoring and controlling the process based on the processed spectrum. The step of real-time processing of the acquired spectrum includes at least one of the following measures: reducing noise; reducing spectral interference; correcting the acquired spectrum for scattering effects and/or other background effects.

It is to be noted that the detector that is used to record the absorption spectra does not have to be capable of recording spectra over the full wavelength range as specified above. It is rather intended to record spectra, i.e. record a plurality of adjacent wavelengths at a time, within a general wavelength range. For example, the detector records a full spectrum between 190 nm and 390 nm (UV), which lies within the specified wavelength range between 190 nm and 2400 nm. It is to be noted that acquiring a spectrum distinguishes over a typical measurement at a single wavelength, which - in practice - may cover a very narrow range below and above the chosen wavelength (but such a narrow range is not considered a spectrum in the sense of the invention).

The invention is based on the finding that the absorbance of an analyte, e.g. a protein, is broader than the typical range of a UV sensor. Inline or online acquisition of an absorption spectrum, rather than only detecting absorbance at a distinct wavelength, offers various possibilities in signal processing and allows advanced control strategies that do not require any pre-defined cut-offs (thresholds). Thus, improved chromatography can be achieved resulting in an optimized, yet robust process which can be much better integrated with a continuous upstream process.

Preferably, the step of real-time processing of the acquired spectrum includes at least one of the following: selecting a specific region of absorbance for further analysis; smoothing of the spectrum (based on the knowledge of the analyte and the buffer); calculating a time derivative of the spectrum; averaging the spectrum; normalizing the spectrum; correcting a baseline of the spectrum; correcting scattering effects.

According to preferred embodiments of the invention, the step of correcting a baseline of the spectrum includes at least one of the following approaches: off-set correction; linear correction (slope subtraction); Asymmetric Least Square correction (AsLS).

The step of correcting scattering effects can include at least one of the following approaches: Multiplicative Signal Correction (MSC); Standard Normal Variate filter (SNV).

The step of real-time processing of the acquired spectrum preferably involves at least one of the following approaches: moving average; time derivative. Moving average is used to remove noise from the spectrum, i. e. to smooth the spectrum. Time derivative on the spectrum is a processing method that helps in enhancing spectral features, correcting baselines, improving resolution, reducing noise, and can be used to detect a breakthrough point of a chromatography column. Another method that can be used for spectral smoothing/noise removal is Savitzky-Golay filtering.

The method according to the invention can be combined with a real-time evaluation algorithm and/or a previously established model. In particular, the method can further comprise the following steps: supplying the processed spectrum to a control unit in which an evaluation algorithm and/or a previously established model is stored; and evaluating the processed spectrum using the algorithm and/or the model. It is to be noted that a bioprocess model is a mathematical representation of the bioprocesses that describes the relevant variables, parameters, and equations that govern the system behavior.

According to one specific embodiment of the invention, the evaluation of the processed spectrum results in a determination of a presence/absence or a concentration of an analyte.

The step of evaluating the processed spectrum can include: automatically detecting a point in time when the processed spectrum starts to diverge from a common baseline of previously processed spectra (breakthrough point, i. e. product breakthrough from the column); and the step of real-time monitoring and controlling the process includes: automatically sending a signal to initiate a chromatography column switch or a filtration device switch at the detected point in time.

Further features and advantages of the invention will become apparent from the following description and from the accompanying drawings to which reference is made. In the drawings:
- Figure 1 shows a schematic representation of a continuous simulated moving bed (SMB) chromatography system;
- Figure 2 shows a schematic visualization of a hardware setup for carrying out the method according to the invention;
- Figure 3 shows an absorption spectrum;
- Figure 4 shows an absorption spectrum similar to Figure 3 showing different effects;
- Figure 5 shows a workflow of a data processing and equipment control algorithm;
- Figure 6 shows an absorbance diagram of a UV-Vis probe at 280 nm throughout a continuous capture step recorded in three different experimental setups A, B and C; and
- Figure 7 shows absorbance at a single wavelength over process time in an exemplary experiment.

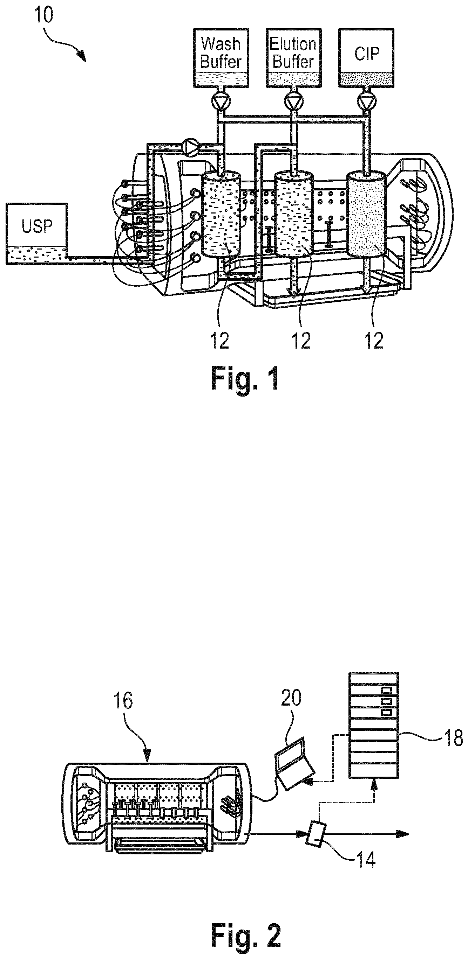

A typical setup of a continuous simulated moving bed (SMB) chromatography system 10 is shown in Figure 1. Multiple chromatography columns 12 can be connected in series. A valve arrangement is configured for selective flow of a feed mixture from an upstream process (USP), a wash buffer, an elution buffer and a sanitizing fluid (acids, bases) for chemical sanitizing according to a "clean-in-place" (CIP) method.

A spectrophotometer assembly 14 for absorption measurements (not shown in Figure 1) is provided at a fixed outlet of multiple columns 12 through which the flow passes during the loading phase. The valve arrangement can be set such that the flow from each column, when it is in the loading phase, is directed to this one outlet. According to an alternative embodiment, a multiplexing detector with a sensor at each column outlet can be used.

The spectrophotometer assembly 14 has a light source, such as a Xenon flash lamp for the ultraviolet (UV) as well as for the visible (VIS) and near-infrared wavelength regions covering a spectral range from 190 nm up to 1100 nm. However, other light sources may be used that cover wavelength segments within the range of 190 nm and 2400 nm. The detector of the spectrophotometer assembly 14 is capable of repeatedly acquiring an absorption spectrum inline or online (measurement at a plurality of adjacent wavelengths at a time) within the wavelength range between 190 nm and 2400 nm, preferably between 190 nm and 1100 nm, more preferably between 190 nm and 780 nm.

Figure 2 shows a schematic hardware setup for controlling a biopharmaceutical purification process, preferably a continuous process, which makes use of a separation arrangement 16. The separation arrangement 16 can be a single-use continuous chromatography system for perfusion processes, such as the Resolute^{®} BioSMB Process System by Sartorius Stedim Biotech GmbH, Germany, for example.

The spectrophotometer assembly 14 is connected to the separation arrangement 16 at a column outlet. The inline or online acquired absorption spectrum is automatically processed by a distributed control strategy (DCS) component 18, which triggers a column switch in the separation arrangement 16 in case a critical signal is reached or a critical process change is detected (without a predefined signal threshold). In particular, the signals from the DCS component 18 are sent via an Open Platform Communications (OPC) standard to a control unit 20 in real-time, which controls operation of the separation arrangement 16, especially the automated column switch when necessary.

It is to be understood that the spectrophotometer assembly 14 does not perform single wavelength or narrow band measurements. Rather, the detector of the spectrophotometer assembly 14 repeatedly records a spectrum within a wavelength range between 190 nm and 2400 nm, e. g. a full UV or UV-Vis spectrum from 190 nm to 780 nm.

The recorded spectrum is transferred to a DCS component which performs the real-time processing that can include, for example, selecting one or more specific regions of the absorbance for further analysis, smoothing of the spectrum, applying a first derivative on the spectrum, averaging the spectrum, normalization of the spectrum, correcting a baseline of the spectrum, correcting scattering effects, etc. These measures can be used for reducing noise and/or reducing spectral interference and/or correcting the acquired spectrum for scattering effects or other background effects. Especially, reducing spectral interference can mean correcting an absorbance band of an analyte for interfering factors and/or correcting the acquired spectrum for variations in the background.

The processed spectra are then used as an input to an algorithm and/or preestablished model that will continuously monitor the spectra and control the running biopharmaceutical purification process in real-time. According to a preferred application, this includes detecting a point in time when a signal will start to diverge from a baseline and then sending a command to the chromatographic equipment to initiate the column switch.

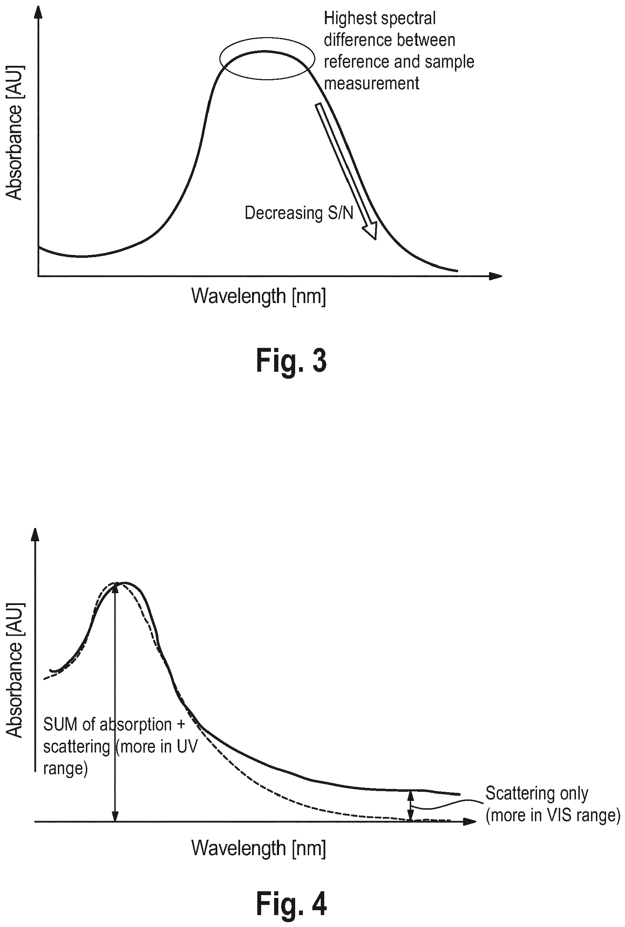

In the following, some examples will be discussed in more detail. The first example, which relates to improving the signal-to-noise ratio (S/N) compared to single wavelength or narrow band width UV sensors, will be explained with reference to Figure 3 which represents an absorption spectrum.

In the plot of Figure 3 it is schematically indicated where S/N is highest. The optimal S/N depends on the selected wavelength range. Here, wavelengths must be selected which are not outside the (linear) detector range. In addition, the difference between a reference signal (buffer) and the sample signal (column outlet) should be maximal. When looking for the optimal S/N of the parameter triggering the column switch, every absorbance at each wavelength contributes to the overall signal but also contributes to the overall noise level. For example, one could average a number of wavelengths to optimize the S/N level. In case all selected wavelengths have a similar S/N, the overall S/N of the averaged signal will improve roughly by the Sqrt(N) where N is the number of selected wavelengths. Any additional wavelength should increase S/N level as compared to the S/N level of the averaged absorbance before the addition. Therefore, there is an optimal range, as shown by the encircled area in Figure 3, to include in this switching parameter to allow for the earliest and most robust detection of a column breakthrough.

Additional S/N increase for averaged wavelengths can be achieved by spectral pre-processing to reduce scatter effects, baseline shifts, noise, etc.

Methods applied in spectral preprocessing that would increase the S/N ratio and hence improve signal quality can include at least one or combinations of the following methods: Asymmetric Least Square Correction (AsLS), a non-linear baseline is calculated for each spectrum using a symmetric least squares algorithm, and then the baseline is subtracted from the spectrum; moving average, removes noise by applying moving average, or median, window to the spectrum; derivatives; Standard Normal Variate (SNV) filter, each observation (spectra) being "normalized" by subtracting the mean and dividing with the standard deviation; Multiplicative Signal Correction (MSC), each spectrum being normalized by regressing it against an average spectrum over a selected set of spectra; averaging of the (processed) signal over a selected absorbance range.

As a specific example, processing of the absorption spectrum with a first derivative combined with averaging (arithmetic mean) of the signal over a wide wavelength range resulted in lowering of the baseline signal noise as calculated by its relative standard deviation (RSD) over time and as compared with a single wavelength, non-processed signal monitoring from 0.23 RSD to 0.07 RSD.

A second example, which relates to correction of the absorbance band in case of varying turbidity (scattering), will be explained with reference to Figure 4.

Variations of turbidity during a process causes a varying background signal. The signal in the visible wavelength range (approx. 380 nm - 750 nm) consists mostly of scattering, the UV signal is a sum of scattering and absorption. Therefore, an increase in scattering (by increasing turbidity) results in increased absorbance values in the UV range and will, if not corrected, be mistaken as a change of the absorbance (and therefore as a change of product concentration, for example). Scattering effects can be minimized by application of spectra processing methods like multiple signal correction (MSC), standard normal variate (SNV) or spectra normalization, for example. This cannot be done for a single wavelength signal.

A third example relates to correction for batch-to-batch media variations or drifts or changes of media composition between a reference and a process measurement.

Variations also occur in the preceding upstream process. For instance, different media components or feeding strategies, as well as the release of impurities like host cell proteins and deoxyribonucleic acid (e. g. by a cell lysis or reduced viability) alter the background signal. Correcting for the background (e. g. by application of different spectra normalization procedures) will result in more accurate absorbance values and therefore be advantageous for a correct column switch.

A fourth example relates to determining thresholds for column switching on-the-fly based on current data before the column breakthrough, instead of using a predefined absorption value (measured in absorption units, AU).

Different chromatographic cycles are fed with varying starting product concentrations, e. g. proteins like monoclonal antibodies (mAbs). Accordingly, measured absorbances during the loading phase of a column will differ between the cycles. A fixed threshold of the absorbance to initiate a column switch is therefore sub-optimal, as it must be over-dimensioned or adjusted in comparison to an individual cycle to account for the variations between the different product concentrations in the feed.

This issue is solved by application of inline or online processing of spectra dependent on the characteristics of the detected signal combined with the automatic algorithm that detects a column break-through point. An automatic break-through point detection algorithm could be based, for example, on an automatic calculation of an average of a signal over time and its relative standard deviation (RSD), and then checking if for any given point the signal value (absorbance value) or its RSD is not getting outside an automatically set limit, or if the signal is not diverging from an average with time, which could be detected for example by an algorithm based on the first or second derivative of the spectral signal.

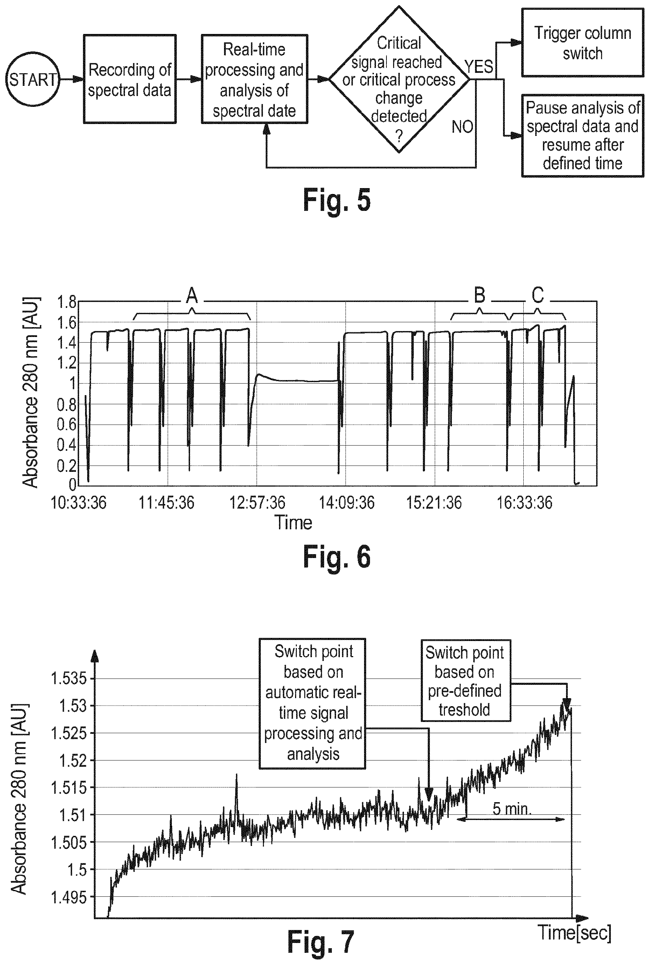

Figure 5 shows a basic workflow of an algorithm that can be used for processing data and controlling process equipment. The applied control routine uses the real-time processed multispectral absorption signal, e. g. a full UV-Vis spectral signal (not only an absorption signal at a single wavelength, such as 280 nm) that is provided by a spectrometer tool, such as the BioPAT^{®} Spectro UV by Sartorius Stedim Biotech GmbH, Germany. A column switch is triggered by the control software component when the critical signal is reached or a critical change in the spectral signal is detected.

In some instances it is expedient to pause the analysis of spectral data or to ignore the data for a given time. For example, a short pause sequence is implemented after every column switch to prevent the triggering of another column switch, in case the breakthrough is briefly still in the threshold area.

The control software component can take advantage of an implemented interface, such as the BioSMB OPC UA interface, as well as the BioPAT^{®} Spectro UV system Modbus TCP interface.

The experiments leading to the invention have been performed using clarified cultivation broth of a Chinese hamster ovary cell line with different mAb concentrations as shown in Table 1 below:

**Table 1: mAb feed concentration and threshold value at 280 nm for experimental setups A, B and C**

| Setups | mAb concentration feed [g/L] | Threshold [AU] |
|---|---|---|
| A | 2.25 | 1.530 |
| B | 1.75 | 1.510 |
| C | 2.70 | 1.560 |

The results demonstrated that predefined cut-offs based on single wavelength measurements can have their limitations which can be improved by using whole UV-Vis spectrum measurements as discussed above.

As shown in Figure 6, a high UV background signal of approximately 1.50 AU in the flow-through was observed in the column loading phase (without presence of the mAb), mainly due to media components of the upstream cultivation (e. g. amino acids). However, after a certain process time, the column capacity has been reached and a breakthrough of the mAb was observed, resulting in a small increase of the UV signal.

For the experimental setup A, a feed solution with 2.25 g/L mAb was processed (see Table 1). At a threshold value of 1.53 AU breakthrough of the mAb was assumed (checked afterwards by off-line analytics to be correct, concentration of mAb = 0.08 g/L). At this threshold the column switch was triggered, and the next column was loaded with the feed solution while the "fully loaded" column was further processed (elution, regeneration). For this setup a robust, very similar loading time was obtained, as expected, for a feed solution with constant mAb concentration (see Figure 6, region A).

For the experimental setup B, a feed solution with a lower mAb concentration (1.75 g/L) was processed (see Table 1), resulting in a longer loading time until breakthrough detection (see Figure 6, region B). The lower threshold value of 1.51 AU was used to minimize product loss (off-line analytics afterwards showed that this was not needed as 1.53 AU already did not result in a significant product loss; in addition such a low threshold makes the process a little unstable).

For the experimental setup C, a higher mAb concentration (2.7 g/L) in the feed was processed (see Table 1) resulting in a robust, reproducible, shorter loading time (see Figure 6, region C). The increased threshold, 1.56 AU (see Table 1) was used to show that the increase of the UV-signal is no artefact but indeed mAb breakthrough (confirmed by off-line analytics; concentration at the breakthrough was 0.3 g/L mAb). The steeper increase of the UV signal seen here could be used for a better signal processing for the detection of the breakthrough by a logarithm which takes into account the first derivative of the signal (as described above in connection with the fourth example).

For example, in this experiment, processing of the absorption spectrum with a first derivative combined with averaging (arithmetic mean) of the signal over a wide wavelength range resulted in lowering of the baseline signal noise as calculated by its relative standard deviation (RSD) over time and as compared with a single wavelength, non-processed signal monitoring from 0.23 RSD to 0.07 RSD.

Figure 7 is an exemplary illustration from the experiment described above showing how real-time automatic spectral signal processing and analysis would facilitate earlier breakthrough-point detection as compared to the predefined threshold, this way increasing process efficiency. The x-axis of the diagram represents the time of the process, while the y-axis represents absorbance for the 280 nm wavelength.

These results clearly show that due to the very high background signal an adjustment of the threshold value is required even for very slight variations within the feed solution. The approaches for processing the UV-Vis signals described above in connection with the four examples help to circumvent these limitations and thus enable a robust continuous process.

### List of Reference Signs

- 10: chromatography system
- 12: chromatography column
- 14: spectrophotometer assembly
- 16: separation arrangement
- 18: DCS component
- 20: control unit

## Claims

1. A method of controlling a biopharmaceutical purification process, preferably a continuous process, the process making use of a separation arrangement, the separation arrangement including at least one, preferably multiple, chromatography columns or filtration devices, the method comprising the following steps:
- repeatedly acquiring an absorption spectrum inline or online at a fluid stream with a detector which is capable of recording spectra within a wavelength range between 190 nm and 2400 nm, preferably between 190 nm and 390 nm or 190 nm and 780 nm or 1100 nm and 2400 nm;
- real-time processing of the acquired spectrum; and
- real-time monitoring and controlling the process based on the processed spectrum;
wherein the step of real-time processing of the acquired spectrum includes at least one of the following measures:
- reducing noise;
- reducing spectral interference;
- correcting the acquired spectrum for scattering effects and/or other background effects.

2. The method according to claim 1, **characterized in that** the step of real-time processing of the acquired spectrum includes at least one of the following:
- selecting a specific region of absorbance for further analysis;
- smoothing of the spectrum;
- calculating a time derivative of the spectrum;
- averaging the spectrum;
- normalizing the spectrum;
- correcting a baseline of the spectrum;
- correcting scattering effects.

3. The method according to claim 2, **characterized in that** the step of correcting a baseline of the spectrum includes at least one of the following approaches:
- off-set correction;
- linear correction (slope subtraction);
- Asymmetric Least Square correction (AsLS).

4. The method according to claim 2 or 3, **characterized in that** the step of correcting scattering effects includes at least one of the following approaches:
- Multiplicative Signal Correction (MSC);
- Standard Normal Variate filter (SNV).

5. The method according to any of claims 2 to 4, **characterized in that** the step of real-time processing involves at least one of the following approaches: moving average; time derivative.

6. The method according to any of the preceding claims, further comprising the following steps:
- supplying the processed spectrum to a control unit in which an evaluation algorithm and/or a previously established model is stored; and
- evaluating the processed spectrum using the algorithm and/or the model.

7. The method according to claim 6, **characterized in that** the evaluation of the processed spectrum results in a determination of a presence/absence or a concentration of an analyte.

8. The method according to claim 6 or 7, **characterized in that** the step of evaluating includes:
- automatically detecting a point in time when the processed spectrum starts to diverge from a common baseline of previously processed spectra;
and the step of real-time monitoring and controlling the process includes:
- automatically sending a signal to initiate a chromatography column switch or a filtration device switch at the detected point in time.
